# EUROPÄISCHE PATENTANMELDUNG

(11) **EP 1 447 942 A2**
(43) Veröffentlichungstag der Anmeldung: **18.08.2004**
(21) Anmeldenummer: 04001376.5
(22) Anmeldetag: 22.01.2004
(51) Int. Cl.: H04L 12/42

(54) **Vorrichtung zur Verbindung zweier Koppelmodule in einer Datenringzelle**

(30) Priorität: 11.02.2003 DE 10305620
(71) Anmelder: Fujitsu Siemens Computers GmbH, 80807 München (DE)
(72) Erfinder: Depta, Robert, 86179 Augsburg (DE); Schur, Herbert, 86167 Augsburg (DE); Lichtenstern, Alois, 86462 Langweid (DE); Gruber, Reinhold, 86438 Kissing (DE)
(74) Vertreter: Epping Hermann & Fischer

(57) **Zusammenfassung**

Die Erfindung betrifft eine Vorrichtung zur Verbindung zweier Koppelmodule in einer Datenringzelle (Z0) mit einer Zellenkontrollvorrichtung (ZKV) zur Steuerung der Koppelmodule (2), Anschlusselementen (5), die jeweils mit einem Koppelmodul (2) verbunden sind und mit einem externen Gerät (D0, D1, D2, D3) verbindbar sind und einer Stromversorgungseinheit (SVE) zur Versorgung der Zellenkontrollvorrichtung (ZKV) und der Koppelmodule (2), die von jedem Anschlusselement (5) Strom erhält, sofern mit diesem ein Gerät (D0, D1, D2, D3) verbunden ist und/oder die von einer externen Stromversorgung (SV) Strom erhält, wobei die Zellenkontrollvorrichtung (ZKV) derart beschaffen und die Anzahl der Koppelmodule (2) derart gewählt ist, dass diese durch die Stromversorgungseinheit (SVE) mit Strom versorgt werden können, wenn eine Anzahl N der Anschlusselemente (5) mit den externen Geräten (D0, D1, D2, D3) verbunden ist.

## Beschreibung

Mittlerweile ist es selbstverständlich, dass Rechner gemeinsame Ressourcen nutzen. Zur Verbindung mehrerer Geräte sind unterschiedliche Netzwerkkonfigurationen möglich. Prinzipiell kann man zwischen sogenannten Point-to-Point-Konfigurationen und Verbindungen durch Datenringe unterscheiden. Bei einer Point-to-Point-Konfiguration werden jeweils zwei Knoten miteinander verbunden. In einem Datenring werden dagegen mehrere Knoten miteinander verbunden. Ein Datenring wird entweder automatisch oder durch eine Kontrollvorrichtung überwacht und gesteuert. Der Datenfluss kann flexibel gelenkt werden, auch Fehler einzelner Geräte bringen den Datenfluss in einem Datenring nicht ins Stocken.

Die Kontrollvorrichtung ist über Anschlusselemente mit einer (in der Regel externen) Stromversorgung verbindbar. Beim Ausfall der für die Kontrollvorrichtung zuständigen Stromversorgung ist die Kontrollvorrichtung nicht mehr in der Lage, den Datenring zu überwachen und zu steuern. Ein Ausfall der Vorrichtung insgesamt ist die Folge. Probleme können bereits dann auftreten, wenn die externe Stromversorgung nur kurze Zeit unterbrochen ist. Abhilfe kann bislang lediglich dadurch erfolgen, dass die Stromversorgung redundant ausgelegt ist. Dies erfordert das Vorsehen entweder einer zweiten, parallelen Stromversorgung oder aber eines Energiespeichers, der die Funktionsfähigkeit noch über einen begrenzten Zeitraum aufrecht erhalten kann.

Aufgabe der Erfindung ist es, eine Vorrichtung anzugeben, die das Aufrechterhalten des Datenflusses und des Zuganges sämtlicher Datenquellen ohne manuellen Eingriff sicherstellt, wenn eine für die Kontrollvorrichtung zuständige Stromversorgung eine unabsichtliche Unterbrechung oder einen Ausfall aufweist.

Diese Aufgabe wird durch eine Vorrichtung zur Verbindung zweier Koppelmodule in einer Datenringzelle gelöst mit einer Zellenkontrollvorrichtung zur Steuerung der Koppelmodule, Anschlusselementen, die jeweils mit einem Koppelmodul verbunden sind und mit einem externen Gerät verbindbar sind, und mit einer Stromversorgungseinheit zur Versorgung der Zellenkontrollvorrichtung und der Koppelmodule, die von jedem Anschlusselement Strom erhält, sofern mit diesem ein Gerät verbunden ist und/oder die von einer externen Stromversorgung Strom erhält, wobei die Zellenkontrollvorrichtung derart beschaffen und die Anzahl der Koppelmodule derart gewählt ist, dass diese durch die Stromversorgungseinheit mit Strom versorgt werden können, wenn eine Anzahl N der Anschlusselemente mit den externen Geräten verbunden ist.

Gemäß der Erfindung findet eine Versorgung der Zellenkontrollvorrichtung mit Strom somit nicht mehr ausschließlich durch eine externe Stromversorgung statt. Die Stromversorgung kann vielmehr auch durch solche Anschlusselemente erfolgen, die mit einem externen Gerät verbunden sind. Die Anschlusselemente sind somit derart ausgestaltet, dass neben "Signalübertragungs-Pins" auch solche "Pins" vorgesehen sind, die eine Stromversorgung übernehmen. Jedes mit einem externen Gerät verbundene Anschlusselement liefert vorteilhafterweise bei gleicher Spannung den gleichen Strombeitrag. Die Vorrichtung ist nun derart ausgestaltet, dass die Zellenkontrollvorrichtung und die zu versorgenden Koppelmodule einen möglichst geringen Stromverbrauch aufweisen. Der Stromverbrauch bestimmt sich dabei in erster Linie nach der Anzahl der vorhandenen Koppelmodule. Ziel ist es, dass lediglich eine Untermenge der vorhandenen Koppelmodule mit einem externen Gerät verbunden zu sein braucht, damit der notwendige Strom zur Aufrechterhaltung der Funktion bereit gestellt werden kann. Im Ergebnis schlägt die Erfindung somit einen Hub vor, der gegenüber konventionellen Hubs eine wesentlich geringere Anzahl an Koppelmodulen (und somit auch Anschlusselementen) aufweist. Durch die Reduzierung der Anzahl der Koppelmodule und der Anschlusselemente lässt sich der Energieverbrauch des Hubs zunächst reduzieren. In Kombination mit veränderten Anschlusselementen, die in der Lage sind, einen Strombeitrag an die Stromversorgungseinheit der Vorrichtung zu liefern, wird eine Vorrichtung geschaffen, die einen Ausfall einer externen Stromversorgung oder einer unabsichtlichen Unterbrechung derselben kompensieren kann. Im Falle des Ausfalles der externen Stromversorgung kann der gesamte Leistungsbedarf dann durch die mit den Anschlusselementen verbundenen Geräte geliefert werden.

In einer bevorzugten Ausgestaltung der Erfindung weist die Stromversorgungseinheit eine Stromkontrollvorrichtung auf, die ein Einschalten der Zellenkontrollvorrichtung erst dann zulässt, wenn die N Anschlusselemente mit externen Geräten verbunden sind oder die externe Stromversorgung angeschlossen ist. Um eine hohe Ausfallsicherheit des Hubs zu gewährleisten, ist es einerseits notwendig, dass dieser mit der externen Stromversorgung angeschlossen ist. Für den Fall, dass diese ausfällt, muss jedoch auch sichergestellt sein, dass zumindest die Anzahl N an Anschlusselementen mit externen Geräten verbunden ist. Sind weniger Geräte mit den Anschlusselementen verbunden, so wäre die Ausfallsicherheit nicht gewährleistet. Durch die Stromkontrollvorrichtung wird die Vorrichtung (der Hub) erst in seine bestimmungsgemäße Funktionsfähigkeit versetzt, wenn dessen Stromversorgung entweder durch die externe Stromversorgung oder über die Anschlusselemente sichergestellt werden kann.

Zweckmäßigerweise weist die geräteinterne Stromversorgungseinheit darüber hinaus eine Steuervorrichtung auf, die die Zellenkontrollvorrichtung mit Strom versorgt und mit der Stromversorgungseinheit verbunden ist. Die Steuervorrichtung ist also unmittelbar mit der Zellenkontrollvorrichtung verbunden und führt dieser den Strom zu. Die Stromzuführung wird allerdings nach Maßgabe eines Signals der Stromkontrollvorrichtung vorgenommen. Solange letztere nicht das Vorhandensein einer externen Stromversorgung oder den Anschluss einer Anzahl N Geräte an jeweiligen Anschlusselemente detektiert, liefert die Stromkontrollvorrichtung kein Signal an die Steuervorrichtung, so dass eine Stromversorgung der Zellenkontrollvorrichtung unterbleibt.

Vorzugsweise erhöht die Steuervorrichtung die Stromlast der Zellenkontrollvorrichtung nach dem Einschalten kontinuierlich von Null auf einen Sollzustand. Hierdurch sollen an den Anschlusselementen angeschlossene Geräte durch kurzzeitig auftretende Stromspitzen gegen Beschädigung geschützt werden. Häufig schalten sich die Geräte durch die Stromspitzen, die beispielsweise während der Steckverbindung mit dem Anschlusselement auftreten können, selbständig ab. Diese Probleme können mittels der Steuervorrichtung verhindert werden.

Vorzugsweise verbindet die Datenringzelle die Geräte in Fibre-Channel-Technologie. Hierdurch sind hohe Datenübertragungsraten erzielbar.

In einer weiteren vorteilhaften Ausgestaltung schaltet die Stromkontrollvorrichtung während des Betriebes der Vorrichtung diese ab, wenn weniger als N externe Geräte mit jeweiligen Anschlusselementen verbunden sind. Ein Abschalten der Vorrichtung erfolgt somit dann, wenn die Ausfallsicherheit, zum Beispiel aufgrund des Ausfalles der externen Stromversorgung nicht mehr sichergestellt werden kann.

In einer bevorzugten Weiterbildung der Erfindung sind zwei Datenringzellen im Daisy-Chain-Betrieb miteinander verbunden. Bei dieser Variante werden mehrere der erfindungsgemäßen "Mini-Hubs" im Daisy-Chain-Betrieb miteinander verbunden. Auch bei dieser Variante ist es ausreichend, wenn lediglich eine Anzahl N der Anschlusselemente beider Datenringzellen mit den externen Geräten verbunden sind. In dieser Konfiguration ist die Ausfallsicherheit ebenfalls gewährleistet.

Die Erfindung wird nachfolgend anhand von Ausführungsbeispielen näher erläutert. Es zeigen:
Figur 1 den Aufbau einer einzelnen Datenringzelle,
Figur 2 eine erfindungsgemäße Vorrichtung mit einer Datenringzelle, und
Figur 3 eine weitere erfindungsgemäße Vorrichtung mit zwei Datenringzellen.

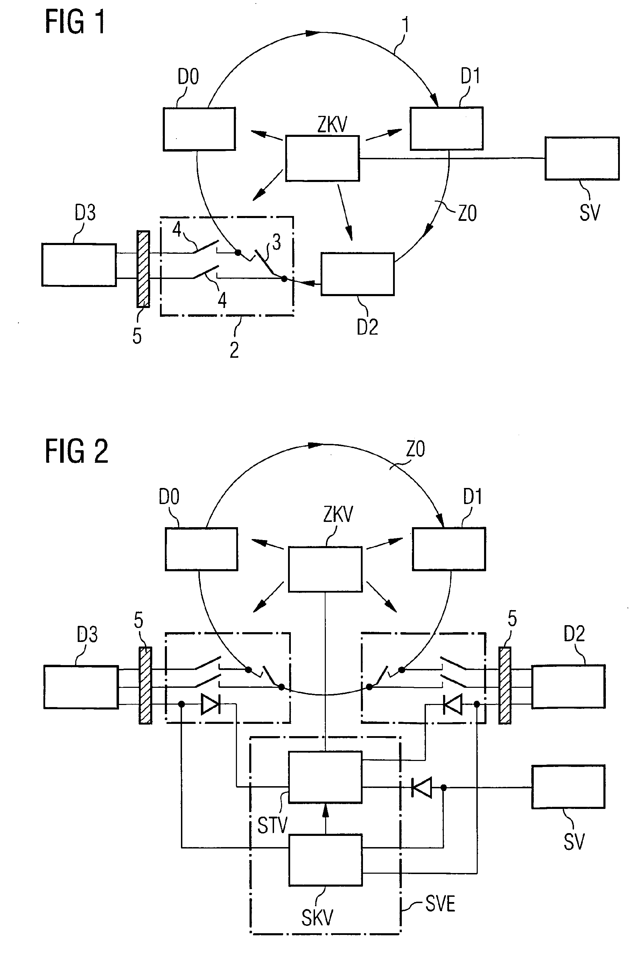

Eine einzelne Datenringzelle weist in Figur 1 eine Datenringleitung 1 auf, die mehrere Geräte D0, D1, D2 und D3 miteinander verbindet. Außerdem weist sie eine Zellenkontrollvorrichtung ZKV auf, die die Geräte der Datenringzelle Z0 überwacht. Die Geräte D0, D1, D2 und D3 sind aber nicht direkt mit der Datenleitung 1 verbunden, sondern über ein Koppelmodul 2, wie anhand des Gerätes D3 im Detail dargestellt ist. Ein solches Koppelmodul 2 ist bei allen Geräten vorhanden, in den Zeichnungen jedoch nicht dargestellt. Durch das Koppelmodul 2 sind einzelne Geräte über ein jeweiliges Anschlusselement 5 aus dem Verbund des Datenringes 1 abtrennbar. Dazu werden Schalter 4 geöffnet und ein Bypass-Schalter 3 geschlossen. Der Datenverkehr zu dem Gerät D3 wird überwacht. Stellt die Zellenkontrollvorrichtung ZKV fest, dass ein Fehler vorliegt, so wird das Gerät D3 automatisch abgeschaltet, um einen störungsfreien Betrieb des Datenringes aufrecht zu erhalten. Die Zellenkontrollvorrichtung ZKV ist mit einer Stromversorgung SV verbunden, die üblicherweise extern, d.h. außerhalb des in Figur 1 dargestellten Hubs angeordnet ist. Eine solche Konfiguration eines Datenringes ist aus dem Stand der Technik bekannt.

Die Figur 2 zeigt eine erfindungsgemäße Vorrichtung, die gegen einen Ausfall der externen Stromversorgung SV gesichert ist. Die Ausgestaltung der Datenringzelle Z0 entspricht dabei der in Figur 1 dargestellten Ausführung. Zusätzlich ist eine geräteinterne Stromversorgungseinheit SVE vorgesehen, die die Zellenkontrollvorrichtung mit Strom versorgt. Die Stromversorgungseinheit SVE weist ihrerseits eine Stromkontrollvorrichtung SKV und eine Steuervorrichtung STV auf.

Die Steuervorrichtung STV ist einerseits direkt mit der externen Stromversorgung SV verbunden. Die Steuervorrichtung STV ist andererseits mit jedem Anschlusselement 5 eines Koppelmoduls 2 verbunden. Die Anschlusselemente 5 sind nun derart ausgestaltet, dass sie neben den Datensignalleitungen auch Leitungen zur Stromübertragung aufweisen. Der Strom wird dabei von den an den Anschlusselementen 5 angeschlossenen Geräten D2, D3 geliefert. Ob mit den jeweiligen Anschlusselementen 5 ein Gerät D0, D1, D2 und D3 verbunden ist, wird durch die Stromkontrollvorrichtung SKV festgestellt. Diese weist deshalb eine Verbindung zu den stromführenden Leitungen der Anschlusselemente 5 auf.

Sobald die Stromkontrollvorrichtung SKV eine vorgegebene Anzahl N an angeschlossenen Geräten (in Figur 2 sind dies die Geräte D2, D3) an den Anschlusselementen 5 registriert oder aber den Anschluss einer externen Stromversorgung feststellt, gibt die Stromkontrollvorrichtung SKV an die Steuervorrichtung STV ein Signal, die Zellenkontrollvorrichtung ZKV mit Strom zu versorgen. Um auftretende Stromspitzen von der Zellenkontrollvorrichtung und auch dem über die Datenringleitung 1 miteinander verbundenen Geräten D2, D3 fernzuhalten, versorgt die Steuervorrichtung STV die Zellenkontrollvorrichtung ZKV nicht schlagartig mit ihrem Nominalstrom, sondern erhöht die Stromlast kontinuierlich von Null auf den Nominalzustand. Durch diese Ausgestaltung der Steuervorrichtung ist die Vorrichtung gegen eine beliebige Steckreihenfolge an den Anschlusselementen gesichert.

Die Ausfallsicherheit der erfindungsgemäßen Vorrichtung gegen eine unabsichtliche Stromunterbrechung oder eines Ausfalles der externen Stromversorgung SV wird nun dadurch sichergestellt, dass die Zellenkontrollvorrichtung ZKV und sämtliche von dieser gesteuerte Koppelmodule 2 durch eine Anzahl N an Anschlusselementen 5 angeschlossenen Geräten D0, D1, D2 und D3 mit Strom versorgt werden kann. Im Ergebnis handelt es sich bei der Vorrichtung um einen "Mini-Hub", der gegenüber konventionellen Hubs eine wesentlich geringere Anzahl an Koppelmodulen und Anschlusselementen aufweist. Die Stromlasten des Mini-Hubs werden auch während des aktiven Betriebs über die Steuervorrichtung eingegrenzt. Die Anschlusselemente 5 liefern jeweils gleiche Leistungsbeiträge und erfüllen die gleiche Strom-Spannungsanforderung. Dies bedeutet, dass jedes Anschlusselement, das mit einem externen Gerät verbunden ist, bei gleicher Spannung den gleichen Strombeitrag liefert. Sind nicht wenigstens N Geräte mit Anschlusselementen 5 während des Betriebes verbunden, so wird die Zellenkontrollvorrichtung ZKV nach einem Steuersignal der Stromkontrollvorrichtung SKV durch die Steuervorrichtung STV abgeschaltet.

Es hat sich als vorteilhaft herausgestellt, wenn die Vorrichtung über vier Koppelmodule und damit über vier Anschlusselemente verfügt, wobei es zur Stromversorgung der Zellenkontrollvorrichtung (ZKV) und der Koppelmodule 2 ausreichend ist, wenn lediglich zwei Anschlusselemente 5 mit externen Geräten D0, D1, D2 und D3 verbunden sind. Kann die Elektronik der Zellenkontrollvorrichtung und der Koppelmodule 2 in einer anderen Technologie gefertigt werden, die eine geringere Leistungsaufnahme aufweist, so kann die Vorrichtung auch eine größere Anzahl an Anschlusselementen 5 und Koppelmodulen 2 aufweisen.

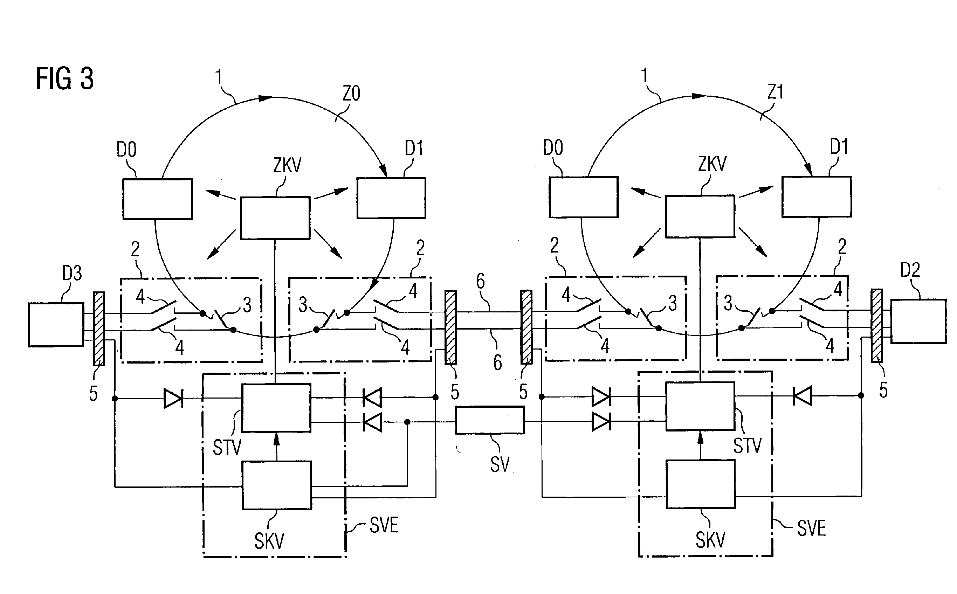

Die Funktionsfähigkeit und hohe Ausfallsicherheit ist zusätzlich gewährleistet, wenn mehrere der in Figur 2 dargestellten Koppelvorrichtungen im Daisy-Chain-Betrieb mit einander verbunden sind. Eine solche Anordnung ist in Figur 3 schematisch dargestellt. Lediglich beispielhaft sind dabei zwei Datenringzellen Z0, Z1 dargestellt. Jede Datenringzelle Z0, Z1 ist identisch aufgebaut und verfügt über eine eigene Stromversorgungseinheit SVE, die jeweils aus der Stromkontrollvorrichtung SKV und der Steuervorrichtung STV besteht. Eine einzige externe Stromversorgung SV ist jeweils mit der Steuervorrichtung STV verbunden. Jeweils ein Anschlusselement 5 der Datenringe Z0, Z1 ist miteinander verbunden (Bezugszeichen 6). Insgesamt verfügt die Vorrichtung über sechs Koppelmodule bzw. Anschlusselemente. Auch bei dieser Anordnung ist es ausreichend, wenn lediglich zwei der Anschlusselemente 5 mit einem externen Gerät (hier D2 in der Datenringzelle Z1 und D3 in der Datenringzelle Z0) angeschlossen sind. Beim Ausfall der externen Stromversorgung SV ist auch der Betrieb der in Figur 3 gezeigten Anordnung sichergestellt.

### Bezugszeichenliste

- 1: Datenringleitung
- 2: Koppelmodul
- 3: Bypass-Schalter
- 4: Schalter
- 5: Anschlusselement
- 6: Leitung
- Z0, Z1: Datenringzelle
- D0, D1, D2, D3: Gerät
- ZKV: Zellenkontrollvorrichtung
- SKV: Stromkontrollvorrichtung
- SVE: Stromversorgungseinheit
- SV: Stromversorgung
- STV: Steuervorrichtung

## Patentansprüche

1. Vorrichtung zur Verbindung zweier Koppelmodule in einer Datenringzelle (Z0) mit
einer Zellenkontrollvorrichtung (ZKV) zur Steuerung der Koppelmodule (2),
Anschlusselementen (5), die jeweils mit einem Koppelmodul (2) verbunden sind und mit einem externen Gerät (D0, D1, D2, D3) verbindbar sind, und
einer Stromversorgungseinheit (SVE) zur Versorgung der Zellenkontrollvorrichtung und der Koppelmodule, die von jedem Anschlusselement (5) Strom erhält, sofern mit diesem ein Gerät (D0, D1, D2, D3) verbunden ist und/oder die von einer externen Stromversorgung Strom erhält,
wobei die Zellenkontrollvorrichtung (ZKV) derart beschaffen und die Anzahl der Koppelmodule derart gewählt ist, dass diese durch die Stromversorgungseinheit (SVE) mit Strom versorgt werden können, wenn eine Anzahl N der Anschlusselemente (5) mit den externen Geräten (D0, D1, D2, D3) verbunden ist.

2. Vorrichtung nach Anspruch 1,
**dadurch gekennzeichnet, dass**
die Stromversorgungseinheit (SVE) eine Stromkontrollvorrichtung (SKV) aufweist, die ein Einschalten der Zellenkontrollvorrichtung (ZKV) erst dann zulässt, wenn N Anschlusselemente (5) mit externen Geräten (D0, D1, D2, D3) verbunden sind oder die externe Stromversorgung (SV) angeschlossen ist.

3. Vorrichtung nach Anspruch 2,
**dadurch gekennzeichnet, dass**
die Stromversorgungseinheit (SVE) eine Steuervorrichtung (STV) aufweist, die die Zellenkontrollvorrichtung (ZKV) mit Strom versorgt und mit der Stromversorgungseinheit verbunden ist.

4. Vorrichtung nach einem der Ansprüche 1 bis 3,
**dadurch gekennzeichnet, dass**
die Steuervorrichtung (STV) die Stromlast der Zellenkontrollvorrichtung (ZKV) nach dem Einschalten kontinuierlich von 0 auf den Sollzustand erhöht.

5. Vorrichtung nach einem der Ansprüche 1 bis 4,
**dadurch gekennzeichnet, dass**
die Datenringzelle (Z0) die Geräte in Fibre Channel-Technologie verbindet.

6. Vorrichtung nach einem der Ansprüche 1 bis 5,
**dadurch gekennzeichnet, dass**
jedes Anschlusselement (5), das mit einem externen Gerät verbunden ist, bei gleicher Spannung den gleichen Strombeitrag liefert.

7. Vorrichtung nach einem der Ansprüche 1 bis 6,
**dadurch gekennzeichnet, dass**
die Stromkontrollvorrichtung (SKV) während des Betriebes der Vorrichtung diese abschaltet, wenn weniger als N externe Geräte (D0, D1, D2, D3) mit jeweiligen Anschlusselementen (5) verbunden sind.

8. Vorrichtung nach einem der Ansprüche 1 bis 7,
**dadurch gekennzeichnet, dass**
zwei Datenringzellen (Z0, Z1) im Daisy-Chain-Betrieb miteinander verbunden sind.

9. Vorrichtung nach einem der Ansprüche 1 bis 8,
**dadurch gekennzeichnet, dass** N ≥ 2.
